# EUROPÄISCHE PATENTANMELDUNG

(11) **EP 0 610 528 A1**
(43) Veröffentlichungstag der Anmeldung: **17.08.1994**
(21) Anmeldenummer: 93102021.8
(22) Anmeldetag: 10.02.1993
(51) Int. Cl.: F16S 3/00, E04B 7/08, E04D 13/03, E04D 3/06, A01G 9/14

(54) **Profilleistenverbindung**

(71) Anmelder: Kremser, Kurt, D-22393 Hamburg (DE)
(72) Erfinder: Kremser, Kurt, D-22393 Hamburg (DE)
(74) Vertreter: Heldt, Gert, Dr. Dipl.-Ing.

(57) **Zusammenfassung**

Eine Profilleistenverbindung zum Verbinden von zwei in Profillängsrichtung neben- oder hintereinander angeordneten Profilleisten (1) weist mindestens eine einen allseitig von Wandungen umschlossenen Hohlraum (10) sowie an mindestens einer der Wandungen eine Aufnahme (12) zum Einstecken eines mit einem seiner Ränder in die Aufnahme eingreifenden flächenhaften Bauelementes (14) auf. Mindestens ein einteilig ausgebildeter, in die zu verbindenden Profilleisten (1) eingreifender Profilverbinder (29) ist durch Verformung der Profilleisten kraftschlüssig mit diesen verbunden. Der Profilverbinder ist in den Profilleisten festklemmbar. Er greift in zwei einander gegenüberliegende Aufnahmen (12) zweier parallel nebeneinander angeordneter Profilleisten (1) ein. Der Profilverbinder (29) ist als massiver, vorzugsweise quaderförmiger Klotz ausgebildet. Er ist aus Metall, vorzugsweise aus Aluminium ausgebildet. Über die gesamte Länge der Profilleisten (1) sind mehrere Profilverbinder (29) angeordnet. Die Aufnahme ist als U-Profil ausgebildet, dessen einander gegenüberliegende Längsseitenwände (16, 17) von einem freien, am Joch (20) des U-Profils angeformten Schenkel (18) und einer dem Schenkel benachbarten Wandung gebildet ist.

## Beschreibung

Die Erfindung betrifft eine Profilleistenverbindung zum Verbinden von zwei in Profillängsrichtung neben- oder hintereinander angeordneten Profilleisten, von denen mindestens eine einen allseitig von Wandungen umschlossenen Hohlraum, sowie an mindestens einer der Wandungen eine Aufnahme zum Einstecken eines mit einem seiner Ränder in die Aufnahme eingreifenden flächenhaften Bauelementes aufweist.

Profilleisten mit einem allseitig von Wandungen umschlossenen Hohlraum besitzen ein hohes Widerstandsmoment und werden daher bei der Herstellung von Vordachkonstruktionen als Träger für große Glas- oder Kunststoffscheiben verwendet, die mit ihrem Rand in die Aufnahme der Profilleiste eingreifen. Da bei formschönen Dachkonstruktionen die Glas- oder Kunststoffscheiben häufig ein- oder mehrmals abgeknickt und/oder in unterschiedlichen Winkelstellungen zueinander ausgerichtet sind, ist es erforderlich, die als Randeinfassung für die Glas- oder Kunststoffscheiben dienenden Profilleisten in unterschiedlichen Winkelstellungen sowohl hinter- als auch nebeneinander anzuordnen.

Das der Erfindung zugrunde liegende Problem besteht dabei darin, die Verbindung mit wenigen, einfach herzustellenden Verbindungselementen so auszuführen, daß von den Längsseitenflächen der Profilleiste keine Öffnung zum Hohlraum geschaffen wird, daß die Verbindungselemente nicht sichtbar sind und daß gleichzeitig ein dauerhafter Halt gewährleistet ist.

Dieses Problem wird erfindungsgemäß durch mindestens einen einteilig ausgebildeten, in die zu verbindenden Profilleisten eingreifenden Profilverbinder gelöst, der durch Verformung der Profilleisten kraftschlüssig mit diesen verbunden ist.

Gemäß einer ersten bevorzugten Ausgestaltung der Erfindung, die zum Verbinden zweier in Profillängsrichtung nebeneinander angeordneter Profilleisten Verwendung findet, ist mindestens ein in zwei einander gegenüberliegende Aufnahmen der Profilleisten eingreifender, die Aufnahmen im Bereich des Eingriffs geringfügig aufweitender Profilverbinder vorgesehen, der zweckmäßig als quaderförmiger, massiver Klotz aus Metall, vorzugsweise aus Aluminium, ausgebildet ist.

Gemäß einer vorteilhaften Ausgestaltung der Erfindung ist die Aufnahme als U-Profil ausgebildet, dessen einander gegenüberliegende Längsseitenwände von einem freien, am Joch des U-Profils angeformten Schenkel und einer dem Schenkel benachbarten Wandung des Hohlraums gebildet sind. Beim Einpressen des Profilverbinders wird der freie Schenkel etwas aufgebogen, so daß er unter Biegespannung gegen den Profilverbinder anliegt.

Zweckmäßig ist dabei mindestens eine der einander gegenüberliegenden Innenflächen des U-Profils mit einer parallel zur Längsachse des Profils verlaufenden Zahnung versehen.

Eine weitere bevorzugte Ausgestaltung der Erfindung sieht vor, daß der freie Schenkel einer als U-Profil ausgebildeten Aufnahme einer ersten Profilleiste in Richtung einer der Aufnahme gegenüberliegenden, als U-Profil ausgebildeten Aufnahme einer zweiten Profilleiste verlängert ist und mindestens mit einem Teil seiner Verlängerung von außen gegen den freien Schenkel der Aufnahme der zweiten Profilleiste anliegt. Derartige Profilleistenverbindungen finden insbesondere dort Verwendung, wo der freie Schenkel einer als U-Profil ausgebildeten Aufnahme unter Bildung einer einseitig offenen, verschließbaren Rinne verlängert ist, die zur Aufnahme einer Regenrinne oder eines Regenrohres als Wandanschluß- oder Pfostenprofil oder zur Aufnahme von Beleuchtungskörpern dienen kann.

Gemäß einer zweiten bevorzugten Ausgestaltung der Erfindung, die zur Verbindung zweier in Profillängsrichtung hintereinander angeordneter Profilleisten bzw. Profilleistenabschnitte Verwendung findet, ist ein von gegeneinander anliegenden Stirnseiten her in die Hohlräume der zu verbindenden Profilleisten eingreifender Profilverbinder vorgesehen, der durch Verformung mindestens einer am Profilverbinder anliegenden Wandungen in Hohlraum kraftschlüssig verankert wird.

Eine bevorzugte Ausgestaltung der Erfindung sieht dabei vor, daß der Profilverbinder mindestens eine Ausnehmung aufweist, die so angeordnet ist, daß eine Wandung des Hohlraums von der Außenseite der Profilleiste her in die Ausnehmung eingeprägt werden kann.

Zweckmäßig sind mehrere Ausnehmungen in einem Bereich des Profilverbinders vorgesehen, der zwischen zwei Hohlraumwandungen eingreift, von denen mindestens eine eine Aufnahme begrenzt. Durch Einprägung der Wandung im Bereich einer Aufnahme sind die Einprägungen nach dem Herstellen der Profilleistenverbindung und dem Einfügen der Glas- oder Kunststoffscheibe in die Aufnahmen von außen nicht mehr sichtbar.

Um zu vermeiden, daß Feuchtigkeit in das Innere des Hohlraumes eindringt, wird die Wandung zweckmäßigerweise nur so stark in die Ausnehmungen eingeprägt, daß eine geschlossene Wandfläche erhalten bleibt.

Im folgenden wird die Erfindung anhand mehrerer, in schematischer Weise dargestellter Ausführungsbeispiele näher erläutert. Es zeigen:
- Fig. 1:: Einen Querschnitt durch einen Eckpfosten aus drei parallel nebeneinander angeordneten und miteinander verbundenen Profilleisten,
- Fig. 2:: einen Querschnitt durch ein Firstprofil aus drei parallel nebeneinander angeordneten und miteinander verbundenen Profilleisten,
- Fig. 3:: einen Querschnitt durch ein weiteres Profil aus drei parallel nebeneinander angeordneten Profilleisten,
- Fig. 4a - e:: fünf Profilverbinder zum Verbinden jeweils zweier hintereinander und im Winkel zueinander angeordneter Profilleisten,
- Fig. 5a - d:: Querschnitte durch eine Profilleiste mit einem, von der Stirnseite her in den Hohlraum eingreifenden Profilverbinder vor und nach dem Herstellen der Prägeverbindung,
- Fig. 6:: eine schaubildliche Darstellung eines stirnseitig in den Hohlraum einer Profilleiste eingeführten abgewinkelten Profilverbinders,
- Fig. 7:: einen Querschnitt durch eine weitere, als doppelwandiges Rinnenprofil ausgebildete Profilleiste mit einem von einer Stirnseite her in den Hohlraum in den Wänden eingreifenden Profilverbinder,

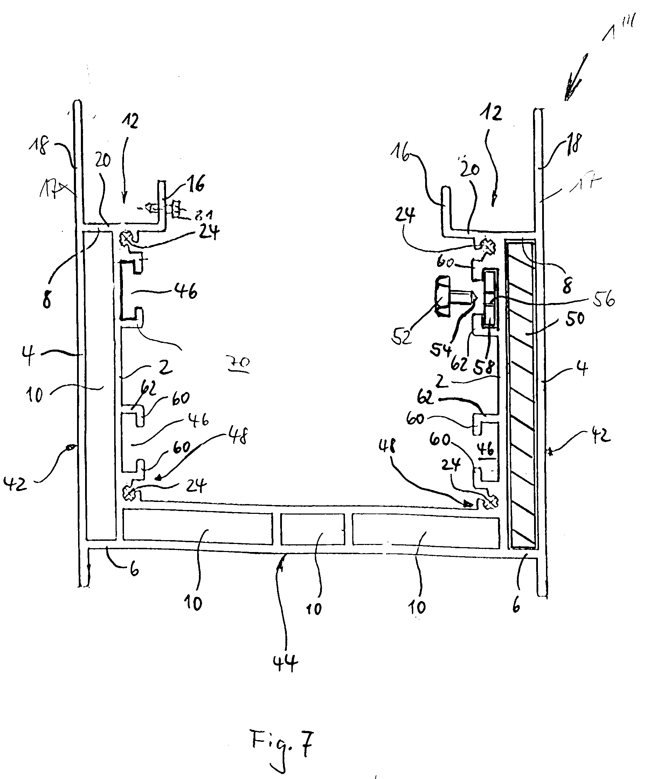

- Fig. 8:: eine räumliche Darstellung eines Regenabflusses aus einem doppelwandigen Rinnenprofil,

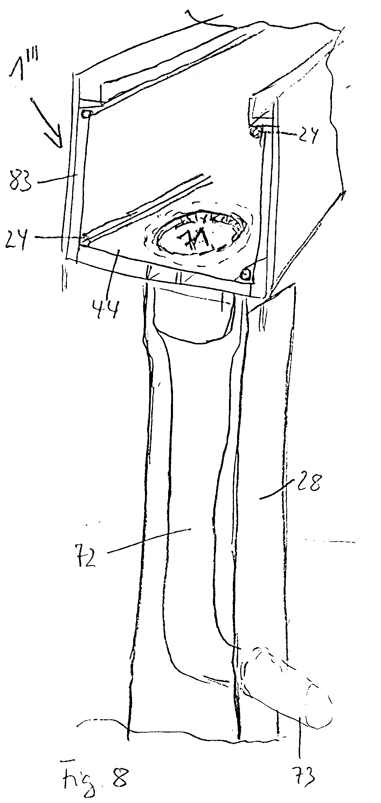

- Fig. 9:: eine schematische Darstellung eines Tonnengewölbes in räumlicher Darstellung,

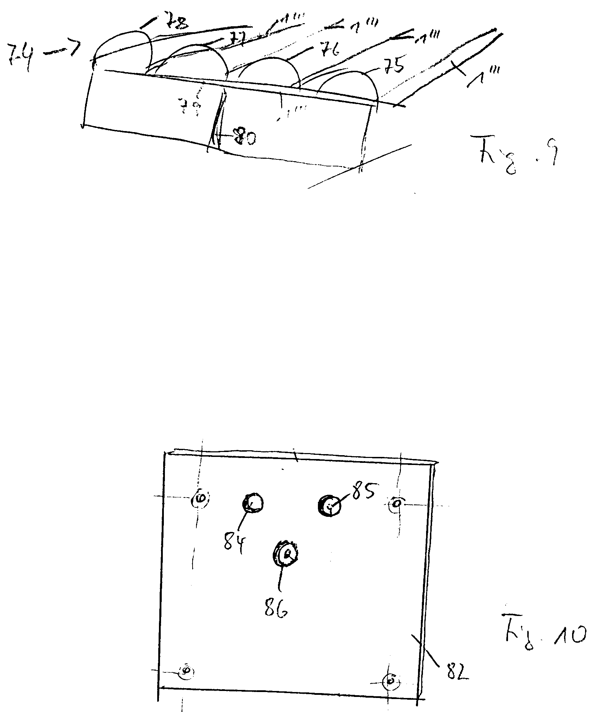

- Fig. 10:: ein Draufsicht auf eine Endplatte und

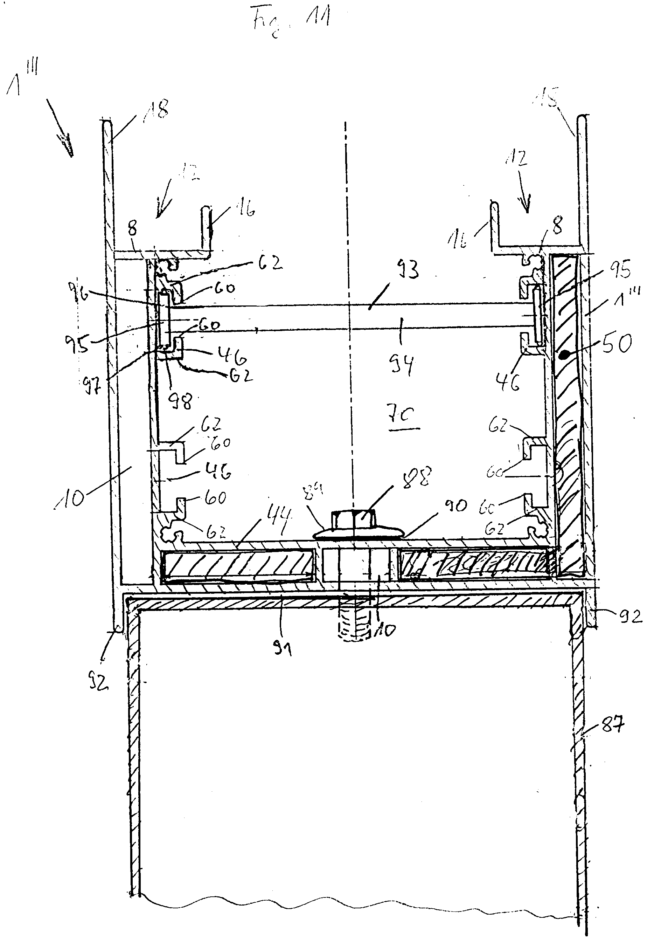

- Fig. 11:: einen Querschnitt durch eine an einem Tragprofil befestigte doppelwandige Profilleiste.

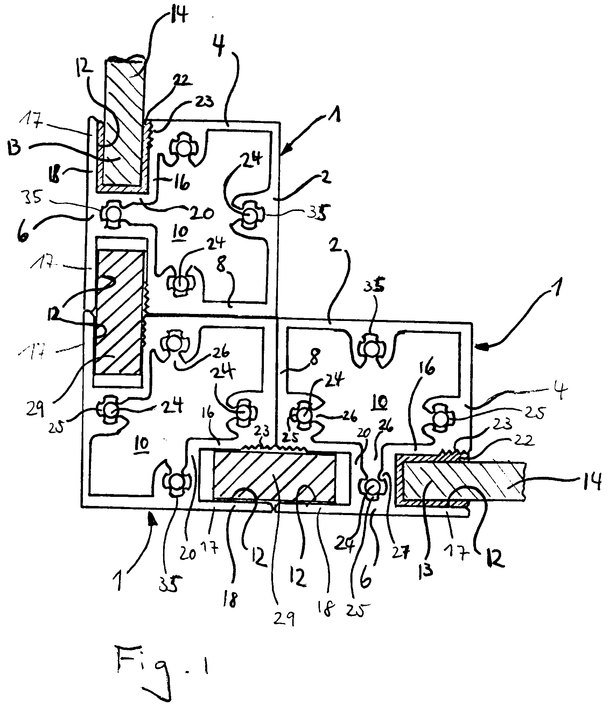

Die in den Figuren 1 bis 6 dargestellten Profilleisten (1, 1', 1'') bestehen im wesentlichen aus einem allseitig von Wandungen (2, 4, 6, 8) umschlossenen Hohlraum (10) sowie mindestens einer Aufnahme (12) für den Rand (13) einer von den Profilleisten (1) getragenen oder gehaltenen Glas- oder Kunststoffscheibe (14).

Die Aufnahmen (12) weisen jeweils einen U-förmigen Querschnitt mit zwei Längsseitenwänden (16, 17) und einem die Längsseitenwände (16, 17) verbindenden Joch (20) auf. Während das Joch (20) und die zum Hohlraum (10) benachbarte Längsseitenwand (16) der Aufnahme (12) jeweils durch eine Wandung (6) der Profilleiste (1) gebildet sind, ist die der Längsseitenwand (16) gegenüberliegende Längsseitenwand (17) als ein am Joch (20) angeformter freier Schenkel (18) ausgebildet. Eine vor dem Einpassen der Glas- oder Kunststoffscheibe (14) in die Aufnahme (12) auf den Rand der Scheibe (14) aufgeschobene Gummidichtung (22) gewährleistet einen sicheren Sitz der Scheibe (14) in der Aufnahme (12). Die der Scheibe (14) zugewandten Innenseiten der Längsseitenwände (16) der Aufnahmen (12) weisen in einem an die Wandung (4) anstoßenden Bereich eine parallel zur Profillängsachse verlaufende Zahnung (23) auf, die mit einer korrespondierenden Zahnung der Gummidichtung (22) zusammenwirkt und verhindert, daß sich die Gummidichtung (22) in der Aufnahme (12) verschiebt.

An den Wandungen (2, 4, 8) sowie zwischen den Jochen (20) sind insgesamt vier, einander jeweils paarweise gegenüberliegende und parallel zur Profillängsrichtung verlaufende Schraubkanäle (24) vorgesehen. Die Schraubkanäle (24) weisen einen im wesentlichen kreuzförmigen Querschnitt mit einem sich zum Hohlraum (10) hin öffnenden Kreuzarm (26) auf. Die Schraubkanäle (24) werden von Ansätzen (27) begrenzt, die an den Wandungen (2, 4, 6, 8) bzw. an den Jochen (20) angeformt sind und zum Hohlraum (10) hin über diese überstehen.

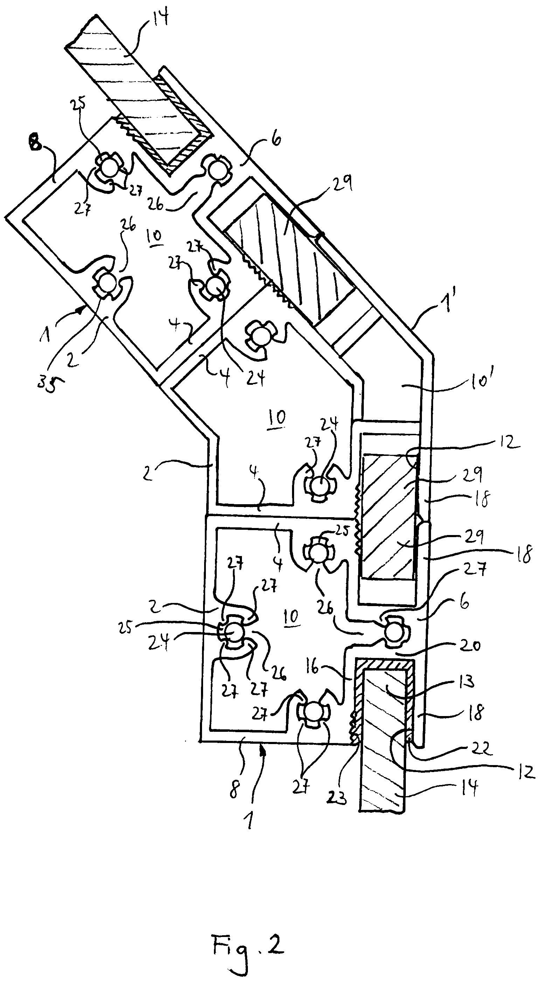

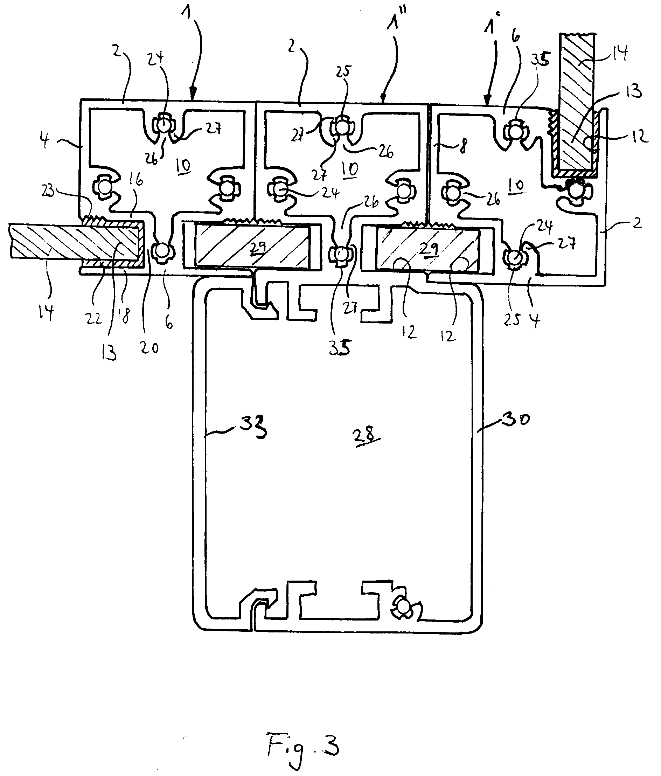

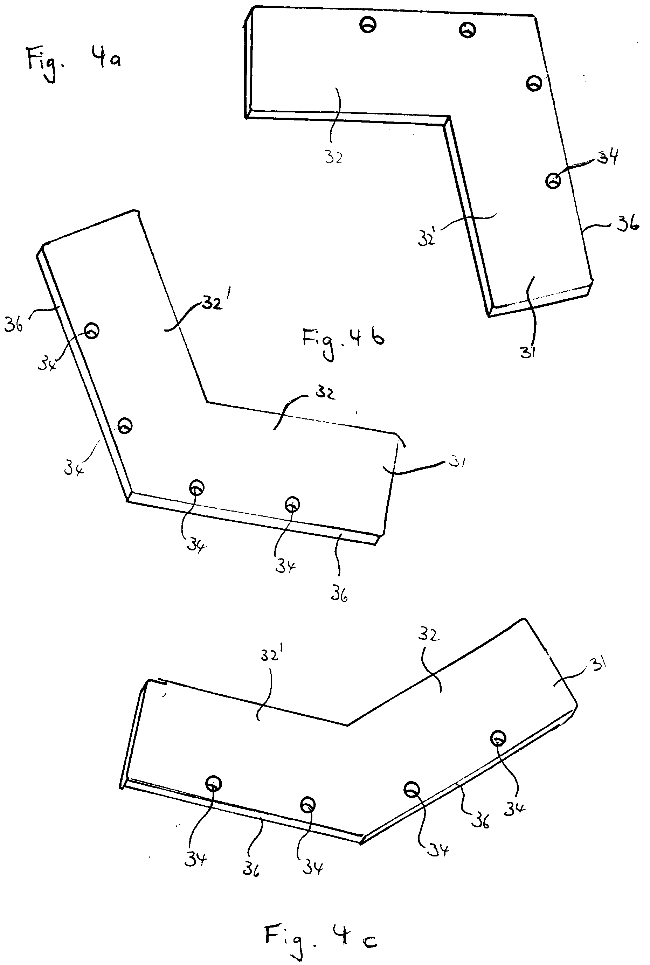

Während die in Figur 1 dargestellten Profilleisten (1) einen im wesentlichen quadratischen Querschnitt besitzen, weist die in Figur 2 in der Mitte angeordnete Profilleiste (1') einen polygonalen Querschnitt und einen weiteren Hohlraum (10') auf. Die in Figur 3 in der Mitte dargestellte Profilleiste (1'') weist zusätzlich ein in Form einer Rinne (28) ausgebildetes, am Schenkel (18) einer Aufnahme (12) angeformtes Profil (30) auf, das durch einen im Rinnenprofil (30) einrastbaren Deckel (33) verschließbar ist. Das Rinnenprofil (30) das das Biegewiderstandsmoment und die Knicksteifigkeit der Profilleiste (1'') vergrößert, kann zur Aufnahme von Versorgungsleitungen, Regenablaufrohren oder -rinnen und Beleuchtungskörpern für indirekte Beleuchtung sowie als Pfosten oder Wandanschlußprofil dienen.

Zur Verbindung zweier oder mehrerer parallel nebeneinander angeordneter Profilleisten (1, 1', 1'') werden diese so angeordnet, daß jeweils zwei Wandungen (2, 4, 6, 8) derart aneinander anliegen, daß sich zwei Aufnahmen (12) mit einander zugewandten Öffnungen gegenüberliegen, wobei die freien Schenkel (18) mit ihren Enden gegeneinander anliegen, so daß die beiden Aufnahmen (12) zusammen einen von außen nicht sichtbaren Hohlraum bilden. In diesem Hohlraum sind ein oder mehrere, über die gesamte Länge der Profilleiste (1, 1', 1'') verteilt angeordnete Profilverbinder (29) angeordnet, die jeweils aus einem massiven, quaderförmigen Metallklotz bestehen, dessen Abmessungen so gewählt sind, daß der freie Schenkel (18) der Aufnahme (12) beim Einführen des Profilverbinders (29) in die Aufnahme (12) im Bereich der elastischen Verformung geringfügig aufgebogen wird. Der in die Aufnahme (12) eingeführte Profilverbinder (29) wird vom freien Schenkel (18) gegen die gegenüberliegende Längsseitenwand (16) der Aufnahme (12) gepreßt, in dieser festgeklemmt und damit fest in ihr verankert. Die auf der Innenseite der Längsseitenwand (16) angeordnete Zahnung (23), die sich geringfügig in die Oberfläche des Profilverbinders (29) einpreßt, verbessert zusätzlich die Haltbarkeit der Verbindung.

Beim Herstellen der Profilleistenverbindung werden der oder die Profilverbinder (29) zuerst in eine Aufnahme (12) einer Profilleiste (1, 1', 1'') eingepreßt und anschließend diese Profilleiste (1, 1', 1'') unter Einpressen des Profilverbinders (29) in die gegenüberliegende Aufnahme (12) der mit der ersten Profilleiste (1, 1', 1'') zu verbindenden zweiten Profilleiste (1) gegeneinander gepreßt.

Der von der Außenseite der Profilleisten (1, 1', 1'') unsichtbare Profilverbinder (29) gewährleistet eine dauerhafte, sichere und lösbare Verbindung zwischen den beiden parallel nebeneinander angeordneten Profilleisten (1, 1', 1'').

Zur Verbindung von in Profillängsrichtung hintereinander angeordneten mit ihren Stirnseiten gegeneinander anliegenden Profilleisten (1, 1', 1'') dienen aus Flachmaterial ausgebildete, vorzugsweise aus Stahlblech ausgestanzte Profilverbinder (31). Derartige Verbinder (31) werden auch zur Herstellung von Eckverbindungen benötigt, bei denen zwei auf Gehrung geschnittene Profilleisten (1, 1', 1'') mit ihren Gehrungsschnittflächen, (68) gegeneinander anliegen. Die in Figur 4 dargestellten Profilverbinder (31) für derartige Eckverbindungen weisen jeweils zwei Schenkel (32, 32') auf, wobei ein von den Schenkeln (32, 32') etwa eingeschlossener Winkel dem Winkel entspricht, unter dem die Profilleisten (1, 1', 1'') aufeinander stoßen. Die Breite der Profilverbinder (31) entspricht dem Abstand zwischen den äußeren Begrenzungen (35) zweier einander gegenüberliegender Schraubkanäle (24), während die Dicke der Profilverbinder (31) der lichten Weite der zum Hohlraum (10, 10') hin offenen Kreuzarme (26) sowie der diesen gegenüberliegenden Kreuzarmen (25) des Schraubkanals (24) entspricht. Durch diese Anordnung wird eine sichere Führung der Profilverbinder (31) in den Schraubkanälen (24) der Profilleiste (1, 1', 1'') gewährleistet.

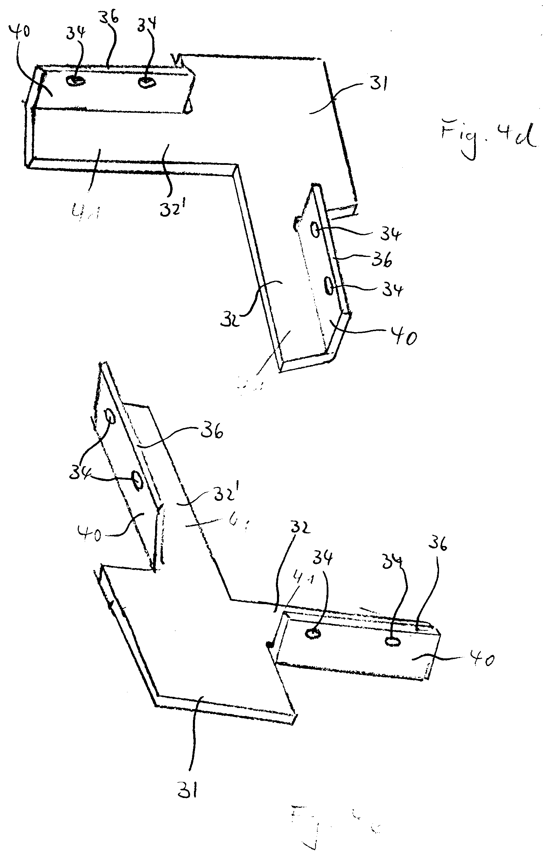

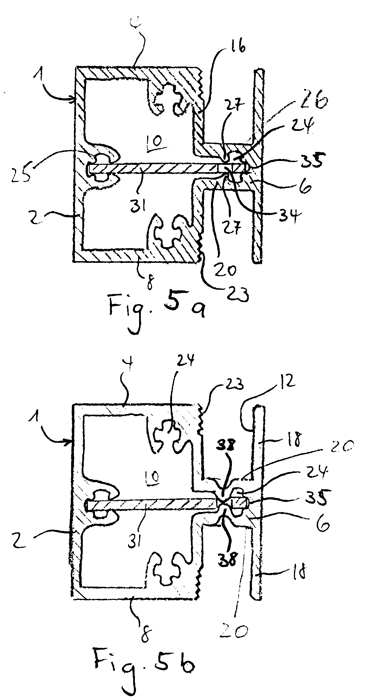

Die Profilverbinder (31) weisen auf jedem Schenkel (32, 32')zwei im Abstand von einer Längsseitenfläche (36) des Schenkels (32, 32') angeordnete Ausstanzungen (34) mit kreisförmigem Querschnitt auf. Die den Profilverbinder (31) durchsetzenden Ausstanzungen (34) dienen zur Aufnahme von in die Wandungen des Hohlprofils von außen her eingebrachte Einprägungen (38) (Figuren 5b und d). Die Einprägungen (38) sind vorzugsweise im Bereich des Jochs (20) der als U-Profil ausgebildeten Aufnahmen (12) angeordnet, da sie dort von den in die Aufnahme (12) eingeführten Glas- oder Kunststoffscheiben (14) verdeckt und daher nicht sichtbar sind.

Bei Profilleisten (1), die in einer Ebene angeordnete nach einander gegenüberliegenden Seiten offene Aufnahmen (12) aufweisen, werden in beiden Jochen (20) Einprägungen (38) vorgenommen, die von gegenüberliegenden Seiten in die Ausnehmungen (34) des Profilverbinders (31) eingreifen (Figuren 5b und d).

Eine von gegenüberliegenden Seiten erfolgende Einprägung ist auch insofern vorteilhaft, als die von beiden Seiten her gleichzeitig einwirkenden Prägewerkzeuge zusätzlich das Widerlager für das jeweils andere Prägewerkzeug bilden, so daß eine Verformung der Hohlprofilleiste (1) außerhalb des Prägebereichs unterbleibt.

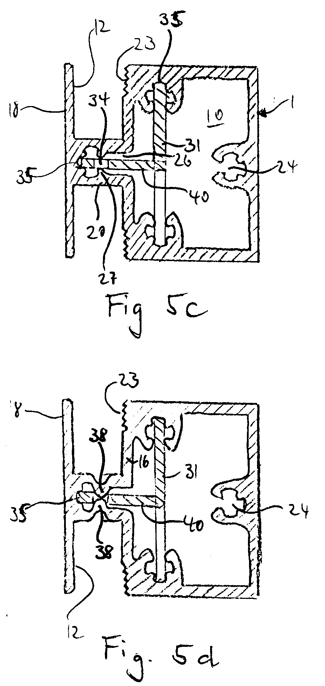

Die in den Figuren 4a - 4c dargestellten, flach ausgebildeten Profilverbinder (31) werden bevorzugt für Gehrungsverbindungen eingesetzt, bei denen die Joche (20) der miteinander verbundenen Profilleisten (1) in einer Ebene verlaufen. Senkrecht auf dieser Ebene stehen die Ebenen der in die jeweiligen Aufnahmen (12) eingreifenden Glas- oder Kunststoffscheiben (14) (Figur 6).

In den Fällen, in denen die Joche (20) der miteinander verbundenen Profilleisten (1) nicht in einer Ebene verlaufen, sondern gegeneinander abgewinkelt sind, können Profilverbinder (31) eingesetzt werden, bei denen (wie in den Figuren 4d und 4e dargestellt) die Schenkel (32, 32') in Schenkellängsrichtung teilweise rechtwinklig abgebogen sind.

Der abgebogene Teil (40) der Schenkel (32, 32') mit den Ausnehmungen (34) greift dann in den zwischen zwei Jochen (20) zweier nach gegenüberliegenden Seiten offenen Aufnahmen (12) gebildeten Schraubkanal (24) ein, so daß die Joche (20) von beiden Seiten her in die Ausnehmungen (34) eingeprägt werden können. Der nicht abgebogene, parallel zur Ebene der Glas- oder Kunststoffscheiben (14) verlaufende Teil (41) der Schenkel (32, 32') greift in einen der Schraubkanäle (24) ein, die in einer Ebene mit den Teilen (41) verlaufen. Der Profilverbinder (31) weist ein hohes Biegewiderstandsmoment auf (Figur 5d). Die Joche (20) der mit diesen Profilverbindungen der Figuren 4d und 4e verbundenen Profilleisten (1) verlaufen in Ebenen, die in einem vom Profilverbinder (31) vorgegebenen Winkel gegeneinander geneigt sind, im Falle der Figur 4d und 4e im Winkel von 90°, also kreuzweise.

Die Joche (20) der Aufnahmen (12) werden jeweils nur so stark eingeprägt, daß zwischen den Außenseiten der Profilleiste (1) und dem Hohlraum (10) keine Verbindung hergestellt wird, durch die z. B. Regenwasser in das Innere des Hohlraumes (10) eindringen könnte.

Die Einprägung (38) erfolgt jeweils in einem Bereich, in dem ein am Joch (20) der Aufnahme (12) angeformter Ansatz (27) den zum Hohlraum (10) hin offenen Kreuzarm (26) des Schraubkanals (24) von den ihm benachbarten Kreuzarmen trennt. Der nach innen zum Hohlraum (10) überstehende Ansatz (27) wird beim Prägevorgang in die Ausstanzung (34) des Profilverbinders gepreßt und verankert diesen dabei im Schraubkanal (24).

Zum Abdichten der Fugen zwischen den aneinanderstoßenden Stirnflächen (39) der Profilleisten (1) kann vor dem Herstellen der Profilleistenverbindung eine dauerelastische Masse wie Silikon von den Stirnseiten her in den Hohlraum (10) der Profilleisten (1) eingefüllt werden. Durch die Verdrängung eines Teils der Masse durch den Profilverbinder (31) während des Zusammenfügens werden auch die Fugen zwischen den Stirnflächen ausgefüllt.

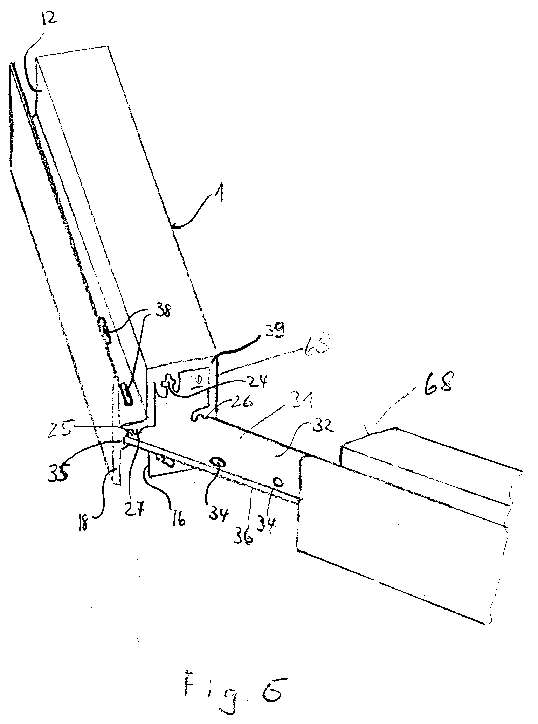

Die in Figur 7 dargestellte Profilleiste (1''') ist als doppelwandiges Rinnenprofil ausgebildet, wobei die Seitenwände (42) jeweils einen und die Bodenwand (44) jeweils drei Hohlräume (10) aufweist, die jeweils allseitig von Wandungen (2,4,6,8) umschlossen werden. An den Wandungen (8), welche die Hohlräume (10) in den Seitenwänden (42) nach oben zu begrenzen, ist jeweils eine Aufnahme (12) angeordnet, in die der beispielsweise von einer Profilleiste (1) eingefaßte Rand (13) eines aus Glas- oder Kunststoffscheiben (14) gebildeten, Randeinfassungen aus Profilleisten (1) aufweisenden Bauelements von oben her eingeführt wird.

Die Aufnahmen (12) weisen einen im wesentlichen U-förmigen Querschnitt auf, wobei die inneren, einander gegenüberliegenden Längsseitenwände (16) kürzer sind, als die äußeren Längsseitenwände (17) und wobei ein Teil des Jochs (20) durch die Wandung (8) gebildet wird.

In die Aufnahmen (12) können die Profilleisten (1) von Randeinfassungen eingelegt werden, die entweder ein Tunnelgewölbe oder Sprossengewölbe nach unten begrenzen. Dabei werden die Profilleisten (1) sinnvollerweise in die Aufnahme (12) so eingepaßt, daß über das jeweilige Gewölbe ablaufendes Wasser über die Längsseitenwände (16) in einen von den Seitenwänden (42) und der Bodenwand (44) umschlossenen Innenraum (70) gelangt. Durch eine Abdichtung der Profilleiste (1), die die Randeinfassung einer das Sprossen- bzw. das Tonnengewölbe bildenden Glas- oder Kunststoffscheibe (14) bildet, gegenüber der Aufnahme (12) wird erreicht, daß das über das jeweilige Gewölbe ablaufende Wasser nicht in die Aufnahme (12) gelangt, sondern unmittelbar in den Innenraum (70), aus dem es über einen Regenwasserabfluß (71) abgeleitet werden kann. Dieser Regenwasserabfuß (71) ist in der Bodenwandung (44) der Profilleiste (1''') vorgesehen. An diesen Regenwasserabfluß (71) schließt sich senkrecht zur Längsrichtung der Profilleiste (1''') ein Regenwasserabflußrohr (71) an, das beispielsweise innerhalb einer Rinne (28) geführt werden kann, die sich in Längsrichtung senkrecht nach unten an den Regenwasserabfluß (71) anschließt. In dieser Rinne (28) wird das Regenwasserabflußrohr (71) nach unten geführt, wo es aus der Rinne (28) mit einem Abflußstutzen (73) austritt. Dabei kann die Rinne (28) gleichzeitig zur Abstützung der Profilleiste (1''') dienen.

Bei einem Tonnengewölbe (74) kann sich eine Profilleiste (1''') zwischen jedem der einander benachbarten Gewölbebögen (75, 76, 77, 78) erstrecken. Darüberhinaus ist es jedoch auch möglich, eine weitere Profilleiste (1''') quer zur Längsrichtung der einzelnen Gewölbebögen (75, 76, 77, 78) anzuordnen, so daß sich die in Längsrichtung erstreckenden Profilleisten (1''') auf dieser in Querrichtung verlaufenden Abstützleiste (79) abstützen können. Zugleich kann diese Abstützleiste (79) als ein Regensammler ausgebildet sein, aus dem das Regenwasser über einen Sammelabfluß (80) beispielsweise in ein Siel abgeleitet wird. In ähnlicher Weise kann auch ein Sprossengewölbe ausgebildet sein.

Zweckmäßigerweise werden die als Randabschlüsse vorgesehenen Profilleisten (1) in den Aufnahmen (12) mit Hilfe von Schraubverbindungen (81) befestigt, die sich durch die Längsseitenwand (16) erstrecken können. Diese sind entweder als Druckverbindungen ausgebildet, die lediglich das in der Aufnahme (12) liegende Profil (1) kraftschlüssig in der Aufnahme (12) festhalten. Es ist jedoch auch möglich, das in der Aufnahme (12) liegende Profil (1) anzubohren und mit der Schraubverbindung (81) zu verschrauben.

In Längsrichtung der Profilleiste (1''') verlaufen Schraubkanäle (24), und zwar zweckmäßigerweise jeweils in Ecken (48) des Innenraumes (70). In diese Schraubkanäle (24) können Schrauben eingeschraubt werden, mit deren Hilfe eine Endplatte (82) vor das Endprofil (83) der Profilleiste (1''') geschraubt werden kann. Diese Endplatte (82) verschließt den Innenraum (70). Dabei kann zwischen dem Endprofil (83) und der Endplatte (82) eine Dichtung vorgesehen sein, die in eine entsprechende Ausnehmung der Endplatte (82) eingelegt werden kann. Es ist jedoch auch möglich, in dieser Endplatte (82) Schraublöcher (84, 85, 86) vorzusehen. Diese Schraublöcher (84, 85, 86) können dazu benutzt werden, die Profilleiste (1''') mit Hilfe der Endplatte (82) an einer Wand zu befestigen, quer zu der die Profilleiste (1''') angebracht werden soll.

Zur Verbindung der in Profillängsrichtung hintereinander angeordneten, mit Stirnflächen (39) gegeneinander anliegenden Profilleisten (1''') dienen von den Stirnflächen (39) her in einen oder mehrere der Hohlräume (10) eingeschobene Profilverbinder (50), die vorzugsweise aus Stahl oder Aluminium bestehen und einen dem Hohlraumquerschnitt im wesentlichen entsprechenden, im vorliegenden Ausführungsbeispiel rechteckigen Querschnitt aufweisen. Die Befestigung der Profilverbinder (50) erfolgt mittels Klemmschrauben (52), deren vorderes Ende (54) kegelförmig ausgebildet ist und die jeweils in eine Gewindebohrung (56) einer Klemmplatte (58) eingeschraubt werden, welche zuvor von der Stirnfläche (39) der Profilleiste (1''') her in eines von mehreren, nach innen zu über die Wandungen (2) der Seitenwände (42) überstehend an diesen angeformten Führungsprofilen (46) eingeschoben worden sind. Beim Eindrehen der Klemmschrauben (52) in die Gewindebohrungen (56) der Klemmplatten (58) stützen sich diese nach innen zu gegen die rechtwinklig abgebogenen freien Enden (60) der die Führungsprofile bildenden Schenkel (62) ab, während das kegelförmige Ende (54) der Klemmschraube (52) gegen die nach innen zu gerichtete Wandung (2) der Seitenwand (42) angepreßt wird, wobei sich diese aus Aluminium bestehende Wandung (2) verformt und mit ihrer dem Hohlraum (10) zugewandten Innenfläche den Profilverbinder (50) gegen die ihr gegenüberliegende Innenfläche der äußeren Wandung (4) der Seitenwand (42) anpreßt.

Der Profilverbinder (50) wird dabei kraftschlüssig im Hohlraum (10) festgeklemmt bzw. verankert.

Um die Haltbarkeit der Verbindung zu verbessern, kann der Profilverbinder (50) ebenfalls mit Ausstanzungen (34) versehen sein, in welche der gegen das Ende der Klemmschraube (52) anliegende Wandbereich beim Eindrehen der Klemmschraube (52) hineingedrückt wird.

Auch in den Hohlräumen (10) der Bodenwand (44) können Profilverbinder (50) vorgesehen sein. Diese können in Längsrichtung beispielsweise von der Endplatte (82) innerhalb der Hohlräume (10) festgehalten werden. Es ist jedoch auch denkbar, solche in der Bodenwand (44) vorgesehene Profilverbinder (50) mit Hilfe von Klemmschrauben in den Hohlräumen (10) festzulegen. In jedem Falle können die Profilverbinder (50) auch in abgewinkelter Form hergestellt werden, damit die Profilleiste (1''') auch in abgewinkelter Form mit einer anderen verbunden werden kann.

Besonders gut eignet sich die Profilleiste (1''') auch als Aufsatz für Trägerprofile (87), die beispielsweise freitragend einen großen Raum überspannen. Auf diesem Trägerprofil (87) kann die Profilleiste (1''') mit ihrer Bodenwand (44) befestigt werden. Zu diesem Zwecke wird die Profilleiste (1''') mit der Bodenwand (44) auf das Trägerprofil (87) aufgelegt und mit Hilfe einer Schraube (88) verschraubt. Diese Schraube (88) durchdringt beispielsweise den mittleren der in der Bodenwand (44) vorgesehenen Hohlräume (10). Zwischen der Bodenwand (44) und einem Kopf (89) der Schraube (88) kann eine Dichtung (90) vorgesehen sein, um zu verhindern, daß Regenwasser durch die Schraubverbindung in den Hohlraum (10) bzw. in den Zwischenraum (91) eindringt, der zwischen der Bodenwand (44) und dem Trägerprofil (87) vorgesehen ist. Eine genaue Führung der Profilleiste (1''') auf dem Trägerprofil (87) wird mit Hilfe von Führungskanten (92) erreicht, die in der Ebene der Seitenwände (42) die Bodenwand (44) überkragen.

Um eine genaue Maßhaltigkeit der Profilleiste (1''') auf großer Länge garantieren zu können, wird in das Führungsprofil (46) ein Querverbinder (93) eingelegt. Dieser besteht aus einer dünnwandigen Blechplatte, deren Dicke nicht größer als der Abstand der beiden freien Enden (60) voneinander ist, die die Schenkel (62) des Führungsprofils (46) begrenzen. Diese Blechplatte (94) erstreckt sich quer durch den ganzen Innenraum (70) und wird mit ihren Längskanten (95) in den einander gegenüberliegenden Führungsprofilen (46) geführt. Zu diesem Zwecke besitzt die Blechplatte (94) an ihren Längskanten (95) Querriegel (96), deren Breite etwa der lichten Weite des Führungsprofils (46) entspricht. Mit diesen Querriegeln (96) wird der Querverbinder (93) im Führungsprofil (46) geführt. Um beim Verschieben des Querverbinders (93) ein Verkanten der Querriegel (96) innerhalb der Führungsprofile (46) zu verhindern, besitzen die Querriegel (96) an ihren auf den Schenkeln (62) aufliegenden Längskanten (97) Abrundungen (98), mit denen die Querriegel (96) innerhalb des Führungsprofils (46) gleiten.

Aufgrund der genauen Führung der Querriegel (96) innerhalb des Führungsprofils (46) und der genauen Bemaßung der Blechplatte (94) wird mit Hilfe des Querverbinders (93) eine Stabilisierung des nach oben offenen Profils erreicht, das die Profilleiste (1''') ausbildet. Der Querverbinder (93) kann sich über die gesamte Länge der Profilleiste (1''') erstrecken. Er erfüllt jedoch auch seine Aufgabe, wenn er sich in einzelnen Abschnitten über die gesamte Länge der Profilleiste (1''') erstreckt. Zwischen jedem Einzelstück verbleibt ein Freiraum, durch den das in den Innenraum (70) eintretenden Regenwasser in Richtung auf die Bodenwand (44) ablaufen kann. Darüberhinaus reichen diese Einzelstücke auch aus, um die Profilleiste (1''') zum Zwecke der Inspektion betreten zu können. Schließlich ist es allerdings auch möglich, auf dem Querverbinder (93) eine Beleuchtung oder Werbevorrichtungen anzubringen. Stücke mit einer Länge von 10 cm in Längsrichtung der Profilleiste (1''') reichen für den vorgesehenen Zweck aus. Zweckmäßigerweise wird aus Festigkeitsgründen der Querverbinder (93) in den oberen Führungsprofilen (46) vorgesehen. In den unteren Führungsprofilen können statt dessen Profilverbinder (50) in der bekannten Weise befestigt werden.

Die Profilleiste (1''') besitzt eine hohe konstruktive Bedeutung. Sie erleichtert gegenüber allen herkömmlichen Mitteln die Erstellung von Haustürdächern, Abdeckhauben, Überdachungen jeglicher Art, beispielsweise für Terrassen und Carports. Mit Hilfe dieser Profilleiste (1''') können Messestände innerhalb kurzer Zeit errichtet werden, und zwar durch Verwendung der Profilleiste (1''') als Trägerprofil sowohl in lotrechter als auch in waagerechter Richtung. Darüberhinaus eignet sich die Profilleiste (1''') besonders gut zur Herstellung von Vitrinen und Schaukästen, da sie als Halterung für Lampen und andere Beleuchtungskörper gut geeignet ist. Weiterhin kann mit der Hilfe dieser Profilleiste (1''') auf einfache Weise ein Raumteiler, insbesondere ein mobiler Raumteiler hergestellt werden, da kurzfristig eine Montage möglich ist. Schließlich kann in der Profilleiste (1''') auch auf einfache Weise eine verschiebliche Stellwand angeordnet werden, indem an der Bodenwand (44) die Führungen für die verschieblichen Wänden befestigt werden.

## Patentansprüche

1. Profilleistenverbindung zum Verbinden von zwei in Profillängsrichtung neben- oder hintereinander angeordneten Profilleisten, von denen mindestens eine einen allseitig von Wandungen umschlossenen Hohlraum, sowie an mindestens einer der Wandungen eine Aufnahme zum Einstecken eines mit einem seiner Ränder in die Aufnahme eingreifenden flächenhaften Bauelementes aufweist, gekennzeichnet durch mindestens einen einteilig ausgebildeten, in die zu verbindenden Profilleisten (1, 1', 1'',1''') eingreifenden Profilverbinder (29, 31, 50), der durch Verformung der Profilleisten (1, 1', 1'',1''') kraftschlüssig mit diesen verbunden ist.

2. Profilleistenverbindung nach Anspruch 1, dadurch gekennzeichnet, daß der Profilverbinder (29, 31, 50) in den Profilleisten (1, 1', 1'', 1''') festklemmbar ist.

3. Profilleistenverbindung nach Anspruch 1 oder 2, dadurch gekennzeichnet, daß der Profilverbinder (29) in zwei einander gegenüberliegende Aufnahmen zweier parallel nebeneinander angeordneter Profilleisten (1, 1', 1'') eingreift.

4. Profilleistenverbindung nach Anspruch 3, dadurch gekennzeichnet, daß der Profilverbinder (29) als massiver, vorzugsweise quaderförmiger Klotz ausgebildet ist.

5. Profilleistenverbindung nach Anspruch 3 oder 4, dadurch gekennzeichnet, daß der Profilverbinder (29) aus Metall, vorzugsweise aus Aluminium ausgebildet ist.

6. Profilleistenverbindung nach einem der Ansprüche 1 bis 5, dadurch gekennzeichnet, daß über die gesamte Länge der Profilleisten (1, 1', 1'') mehrere Profilverbinder (29) angeordnet sind.

7. Profilleistenverbindung nach einem der Ansprüche 1 bis 6, dadurch gekennzeichnet, daß die Aufnahme (12) als U-Profil ausgebildet ist, dessen einander gegenüberliegende Längsseitenwände (16, 17) von einem freien, am Joch (20) des U-Profils angeformten Schenkel (18) und einer dem Schenkel (18) benachbarten Wandung (6) gebildet ist.

8. Profilleistenverbindung nach Anspruch 7, dadurch gekennzeichnet, daß der freie Schenkel (18) unter Biegespannung gegen den Profilverbinder (29) anliegt.

9. Profilleistenverbindung nach Anspruch 7 oder 8, dadurch gekennzeichnet, daß die freien Schenkel (18) der einander gegenüberliegenden Aufnahmen (12) mit ihren freien Enden gegeneinander anliegen.

10. Profilleistenverbindung nach einem der Ansprüche 7 bis 9, dadurch gekennzeichnet, daß mindestens eine der einander gegenüberliegenden Längsseitenwände (16, 17) auf ihrer dem Verbinder (29) zugewandten Innenseite mit einer parallel zur Profillängsrichtung verlaufenden Zahnung (23) versehen ist.

11. Profilleistenverbindung nach einem der Ansprüche 3 bis 10, dadurch gekennzeichnet, daß der freie Schenkel (18) einer als U-Profil ausgebildeten Aufnahme (12) einer ersten Profilleiste (1, 1', 1'') in Richtung der der Aufnahme (12) gegenüberliegenden, als U-Profil ausgebildeten Aufnahme (12) einer zweiten Profilleiste (1, 1', 1'') verlängert ist und mindestens mit einem Teil seiner Verlängerung von außen gegen den freien Schenkel (18) der Aufnahme (12) der zweiten Profilleiste (1, 1', 1'') anliegt.

12. Profilleistenverbindung nach Anspruch 1 oder 2, dadurch gekennzeichnet, daß der Profilverbinder (31, 50) von gegeneinander anliegenden Stirnseiten (28) in die Hohlräume (10) zweier in Profillängsrichtung hintereinander angeordneten Profilleisten (1, 1''') eingreift.

13. Profilleistenverbindung nach Anspruch 12, dadurch gekennzeichnet, daß der Profilverbinder (31, 50) durch Verformung mindestens einer am Profilverbinder (31, 50) anliegenden Wandung (2, 4, 6, 8) der Profilleiste (1, 1''') kraftschlüssig im Hohlraum (10) verankerbar ist.

14. Profilleistenverbindung nach Anspruch 12 oder 13, dadurch gekennzeichnet, daß der Profilverbinder (31, 50) mindestens eine Ausnehmung (34) aufweist, in die von einer Seite der Profilleiste (1, 1''') eine der Wandungen (2, 4, 6, 8) bereichsweise einprägbar ist.

15. Profilleistenverbindung nach einem der Ansprüche 12 bis 14, dadurch gekennzeichnet, daß der Profilverbinder (31, 50) aus Flachmaterial, vorzugsweise aus Flachstahl, ausgebildet ist.

16. Profilleistenverbindung nach Anspruch 15, dadurch gekennzeichnet, daß das Flachmaterial aus zwei im Winkel aufeinander stoßenden Schenkeln (32, 32') besteht.

17. Profilleistenverbindung nach Anspruch 16, dadurch gekennzeichnet, daß mindestens einer der Schenkel (32, 32') als ein sich in Richtung des Schenkels (32, 32') erstreckendes Winkelprofil ausgebildet ist, dessen aus der Ebene des Flachmaterials abgebogener Teil (40) mit den Ausnehmungen (34) versehen ist.

18. Profilleistenverbindung nach einem der Ansprüche 13 bis 17, dadurch gekennzeichnet, daß die Ausnehmung (34) in einem Bereich des Profilverbinders (31; 50) angeordnet ist, der zwischen zwei einander gegenüberliegenden Hohlraumwandungen (6; 2,4) eingreift.

19. Profilleistenverbindung nach Anspruch 18, dadurch gekennzeichnet, daß mindestens eine der Hohlraumwandungen (6) eine Aufnahme (12) begrenzt.

20. Profilleistenverbindung nach Anspruch 18 oder 19, dadurch gekennzeichnet, daß mindestens eine der Hohlraumwandungen (6) das Joch (20) einer als U-Profil ausgebildeten Aufnahme (12) bildet.

21. Profilleistenverbindung nach einem der Ansprüche 13 bis 20, dadurch gekennzeichnet, daß die Wandung (6, 2) nur so stark eingeprägt ist, daß keine Verbindung zwischen der Außenseite der Profilleiste (1, 1''') und dem Hohlraum (10) hergestellt wird.

22. Profilleistenverbindung nach einem der Ansprüche 12 bis 21, dadurch gekennzeichnet, daß der Profilverbinder (31) zwischen zwei einander gegenüberliegenden, jeweils an der Innenseite einer Wandung (2, 4, 6, 8) angeformten und zum Hohlraum (10) hin offenen Schraubkanälen (24) geführt ist.

23. Profilleistenverbindung nach Anspruch 22, dadurch gekennzeichnet, daß die Schraubkanäle (24) einen im wesentlichen kreuzförmigen Querschnitt mit zwei einander gegenüberliegenden, einen zum Hohlraum (10) hin offenen Kreuzarm (26) begrenzenden Ansätzen aufweisen.

24. Profilleistenverbindung nach Anspruch 23, dadurch gekennzeichnet, daß die Ansätze (27) in die Ausnehmung (34) des Profilverbinders (1) einprägbar sind.

25. Profilverbindung nach einem der Ansprüche 21 bis 24, dadurch gekennzeichnet, daß mindestens einer der Schraubkanäle (24) mindestens auf einer Seite von einer Wandung (6) begrenzt ist, die das Joch (20) einer als U-Profil ausgebildeten Aufnahme (12) bildet.

26. Profilleistenverbindung nach einem der Ansprüche 12 bis 25, dadurch gekennzeichnet, daß ein Teil (40) des Profilverbinders (31) abgebogen ist.

27. Profilleistenverbindung nach Anspruch 26, dadurch gekennzeichnet, daß die Profilleiste (1, 1', 1'') einwandig den Hohlraum (10) umschließt.

28. Profilleistenverbindung nach Anspruch 1 bis 26, dadurch gekennzeichnet, daß die Profilleiste (1''') zweiwandig den Innenraum (70) umschließt.

29. Profilleistenverbindung nach Anspruch 28, dadurch gekennzeichnet, daß die Profilleiste (1''') als U-Profil ausgebildet ist, dessen Innenraum (70) von zwei im wesentlichen planparallelen Seitenwänden (42) und einer zu dieser im wesentlichen rechtwinkligen Bodenwand (44) umschlossen ist.

30. Profilleistenverbindung nach Anspruch 28 und 29, dadurch gekennzeichnet, daß der Profilverbinder (50) sich durch Hohlräume (10) erstreckt, die sich zwischen einer Innenwandung (2) und einer Außenwandung (4) mindestens einer der Seitenwände (42) und/oder der Bodenwand (44) erstrecken.

31. Profilleistenverbindung nach Anspruch 28 bis 30, dadurch gekennzeichnet, daß von den Seitenwänden (42) mindestens ein Führungsprofil (46) in den Innenraum (70) ragt, das als Aufnahme für Profilverbinder (50) vorgesehen ist.

32. Profilleistenverbindung nach Anspruch 31, dadurch gekennzeichnet, daß die Führungsprofile (46) der beiden Seitenwandungen (42) sich einander gegenüberliegen.

33. Profilleistenverbindung nach Anspruch 31 und 32, dadurch gekennzeichnet, daß das Führungsprofil (46) von zwei von der Seitenwand (42) in den Innenraum (70) ragenden Schenkeln (62) gebildet wird, deren freie in den Innenraum (70) hineinragende Enden (60) aufeinanderzu abgewinkelt sind und auf diese Weise mit der Innenwand (2) ein zur Aufnahme eines Profilverbinders (50) geeignetes Führungsprofil (46) bildet.

34. Profilleistenverbindung nach Anspruch 33, dadurch gekennzeichnet, daß zwischen den abgewinkelten freien Enden (60) ein Spalt freibleibt, der zur Aufnahme einer den Profilverbinder (50) im Führungsprofil (46) verklemmenden Klemmschraube (52) vorgesehen ist.

35. Profilleistenverbindung nach Anspruch 33 und 34, dadurch gekennzeichnet, daß im Führungsprofil (46) eine die Klemmschraube (52) aufnehmende Klemmplatte (58) vorgesehen ist, durch deren Gewindebohrung (56) die Klemmschraube (52) sich erstreckt und mit ihrem vorderen Ende (54) auf die Innenwand (2) zum Zwecke der Festlegung des im Hohlraum (10) steckenden Profilverbinders (50) drückt.

36. Profilleistenverbindung nach Anspruch 28 bis 35, dadurch gekennzeichnet, daß mindestens eine der Seitenwandungen (42) an ihrem der Bodenwandung (44) abgewandten oberen Ende eine Aufnahme (12) aufweist, die mindestens teilweise in den Innenraum (70) hineinragt.

37. Profilleistenverbindung nach Anspruch 36, dadurch gekennzeichnet, daß die Aufnahme (12) mit einer sie zur Bodenwand (42) nach unten abschließenden Wandung (8) den Hohlraum (10) verschließt.

38. Profilleistenverbindung nach Anspruch 36 und 37, dadurch gekennzeichnet, daß die Aufnahme (12) als ein sich in Längsrichtung der Profilleiste (1''') erstreckendes U-Profil ausgebildet ist, dessen Längsseitenwände (16, 17) planparallel zu den Seitenwänden (42) verlaufen.

39. Profilleistenverbindung nach Anspruch 38, dadurch gekennzeichnet, daß eine der Längsseitenwände (17) einen freien Schenkel (18) bildet, der in der Ebene der Außenwandung (4) verläuft.

40. Profilleistenverbindung nach Anspruch 38 und 39, dadurch gekennzeichnet, daß die Aufnahme (12) zur Abstützung von Dachflächen vorgesehen ist.

41. Profilleistenverbindung nach Anspruch 40, dadurch gekennzeichnet, daß die Dachfläche an ihrer unteren Kante eine Randeinfassung aufweist, die in der Aufnahme (12) gelagert ist.

42. Profilleistenverbindung nach Anspruch 41, dadurch gekennzeichnet, daß die Randeinfassung aus einer Profilleiste (1, 1', 1'') besteht, die sich in Längsrichtung durch die Aufnahme (12) erstreckt.

43. Profilleistenverbindung nach Anspruch 42, dadurch gekennzeichnet, daß sich durch die in den Innenraum (70) hineinragende Längsseitenwand (16) eine Schraubverbindung (81) zur Festlegung der Randeinfassung erstreckt.

44. Profilleistenverbindung nach Anspruch 28 bis 43, dadurch gekennzeichnet, daß sich durch mindestens zwei einander gegenüberliegend angeordnete Führungsprofile (46) ein Querverbinder (93) zur gegenseitigen Stabilisierung der Seitenwände (42) erstreckt.

45. Profilleistenverbindung nach Anspruch 44, dadurch gekennzeichnet, daß der Querverbinder (93) aus einer sich durch den Innenraum (70) erstreckenden Blechplatte (94) besteht, an deren in die Führungsprofile (46) hineinragenden Längskanten (95) rechtwinklig zur Ebene der Blechplatte (94) verlaufende Querriegel (96) angeordnet sind, die im Führungsprofil (46) geführt sind.

46. Profilleistenverbindung nach Anspruch 45, dadurch gekennzeichnet, daß auf den Querriegeln (96) Abrundungen (98) zur Führung der Querriegel (96) in den Führungsprofilen (46) vorgesehen sind.

47. Profilleistenverbindung nach Anspruch 45 und 46, dadurch gekennzeichnet, daß die Blechplatte (94) als Trittblech zum Begehen der Profilleiste (1''') ausgebildet ist.

48. Profilleistenverbindung nach Anspruch 44 bis 47, dadurch gekennzeichnet, daß die Querverbinder (93) sich in Abständen durch den Innenraum (70) erstrecken.

49. Profilleistenverbindung nach Anspruch 28 bis 48, dadurch gekennzeichnet, daß der Innenraum (70) als eine von dem Dach ablaufendes Wasser auffangende Regenrinne ausgebildet ist, die über einen Regenwasserabfluß (71) mit einem Regenwasserabflußrohr (72) verbunden ist.

50. Profilleistenverbindung nach Anspruch 49, dadurch gekennzeichnet, daß das Regenwasserabflußrohr (72) sich durch eine Rinne (28) erstreckt, die die Profilleiste (1''') vom Boden abstützt.

51. Profilleistenverbindung nach Anspruch 40 bis 50, dadurch gekennzeichnet, daß die Aufnahmen (12) der einander gegenüberliegenden Seitenwände (42) zur Aufnahme einander benachbarter Gewölbe eines Tonnen- und/oder Sprossengewölbes vorgesehen sind.

52. Profilleistenverbindung nach Anspruch 51, dadurch gekennzeichnet, daß mindestens zwei zueinander parallel verlaufende Profilleisten (1''') in eine senkrecht zu ihnen verlaufende, als Abschlußleiste (79) ausgebildete Profilleiste (1''') münden, die parallel laufende Profilleisten (1''') abstützt.

53. Profilleistenverbindung nach Anspruch 52, dadurch gekennzeichnet, daß die Abstützleiste (79) als Regensammler für das durch die parallel laufenden Profilleisten (1''') zusammenfließende Regenwasser ausgebildet ist und mit einem Sammelabfluß (80) versehen ist.

54. Profilleistenverbindung nach Anspruch 28 bis 53, dadurch gekennzeichnet, daß die Profilleiste (1''') auf einem einen Raum überspannenden Trägerprofil (87) befestigt ist.

55. Profilleistenverbindung nach Anspruch 54, dadurch gekennzeichnet, daß die Profilleiste (1''') über eine Schraube (88), die durch die Bodenwand (44) in das Trägerprofil (87) hineinragt, mit diesem verschraubt ist.

56. Profilleistenverbindung nach Anspruch 55, dadurch gekennzeichnet, daß die Schraube (88) einen mit einer Dichtung (90) auf der Bodenwand (44) abgedichteten Kopf (89) aufweist.
